# EUROPEAN PATENT APPLICATION

(11) **EP 1 189 215 A2**
(43) Date of publication of application: **20.03.2002**
(21) Application number: 01307970.2
(22) Date of filing: 19.09.2001
(51) Int. Cl.: G11B 7/09

(54) **Optical pickup actuator**

(30) Priority: 19.09.2000 JP 2000282958
(71) Applicant: Mitsumi Electric Co., Ltd., Chofu-shi, Tokyo (JP)
(72) Inventor: Hori, Ken'ichi, c/o Mitsumi Electric Co. Ltd., Atsugi-shi, Tokyo (JP)
(74) Representative: Moir, Michael Christopher

(57) **Abstract**

In an optical pickup actuator 237 of an optical disc drive 10, soft solder 72 is used for fixing suspension wires 237f to terminals 71 formed on side surfaces of a lens holder 237e. Lumps of the solder 72 are covered with insulating films 73. The suspension wires 237f are further fixed to a damper base 237a to swingably support the lens holder 237e against the damper base 237a. The suspension wire 237f is also used for supplying electric power to a focusing coil 237b and a tracking coil 237c through the terminals 71. When the lens holder 237e greatly swings, there is a case where the lens holder 237e comes into contact with a peripheral member. However, the lumps of the solder 72 do not come into contact with the peripheral member because they are covered with insulating film 73. Thus, it is possible to prevent the focusing coil 237b and the tracking coil 237c short-circuiting, even though the lens holder 237e comes into contact with the peripheral member.

## Description

### BACKGROUND OF THE INVENTION

This invention relates to an optical pickup unit of an optical disc drive and, in particular, to improvement of an actuator of the optical pickup unit.

An optical pickup unit is provided in an optical disc drive and irradiates a laser beam to an optical disc loaded into the optical disc drive to detect the reflected laser beam from the optical disc.

The optical pickup unit generally comprises a pickup base, on which a laser diode, a photodiode, a beam splitter and a mirror are mounted, making it possible to move in a radial direction of the optical disc, an actuator base held by the pickup base, and an actuator attached to the actuator base.

An existing actuator comprises a lens holder to which an object lens, a focusing coil, and a tracking coil are attached, a damper base, and four suspension wires for swingably fixing and supporting the lens holder on the damper base. The existing actuator is attached to the pickup base by fixing the damper base onto the actuator base.

The suspension wires are used not only for supporting the lens holder but also as electric wiring for supplying electric power for the focusing coil and the tracking coil. Therefore, the suspension wires are generally fixed to the lens holder with soft solder.

The suspension wires are generally fixed at upper and lower points on each side of the lens holder. In particular, two terminals are provided on each side of the lens holder to connect ends of the focusing coil or ends of the tracking coil. The suspension wires are soldered on the terminals.

Because the supension wires are soldered at the sides of the lens holder as mentioned above, the solder lumps soldering the suspension wires to the terminals are located at the outermost end of the existing actuator.

There is a case where the solder lumps come into contact with a peripheral member of the optical pickup unit when the solder lumps are larger than a required size, or project more outwardly than a permitted limit when the lens holder is swung in a lateral direction. In this case, if the peripheral member is a conductor, the focusing coil and/or the tracking coil short-circuit(s).

Thus, the existing actuator for the optical pickup unit has a problem that the focusing coil and/or the tracking coil may short-circuit when the optical disc drive is in an operation state.

### SUMMARY OF THE INVENTION:

It is therefore an object of the preferred embodiment of this invention to provide an optical pickup actuator capable of preventing a focusing coil and a tracking coil from short-circuiting even during wide swings.

Other objects of this invention will become clear as the description proceeds.

According to an aspect of this invention, an optical pickup actuator for use in an optical disc drive includes a lens holder to which a focusing coil and a tracking coil are attached, a damper base and suspension wires fixed to both of the lens holder and the damper base for swingably supporting the lens holder on the damper base. Each of the suspension wires is electrically connected to either the focusing coil or the tracking coil at a connection point. The optical pickup actuator is characterized by an insulating film for covering the connection point between each of the suspension wires and either the focusing coil or the tracking coil.

In the optical pickup actuator, the insulating film covers a solder lump which is located at the connection point to connect each of the suspension wires to the focusing coil or the tracking coil.

In the optical pickup actuator, resin that absorbs ultraviolet rays, epoxy or quick-drying glue is used for the insulating film.

### BRIEF DESCRIPTION OF THE DRAWINGS

Preferred features of the present invention will now be described, by way of example only, with reference to the accompanying drawings, in which:-
Fig. 1 is a perspective plan view of an optical disc drive to which an optical pickup actuator of this invention is applied;
Figs. 2A, 2B and 2C are a perspective plan view, a perspective left-and side view and a perspective right-hand side view, respectively, showing a loading/ejecting state of the optical disc drive of Fig. 1;
Figs. 3A and 3B are a perspective plan view and a perspective lefthand side view, respectively, showing a driving unit used in the optical disc drive of Fig. 1;
Fig. 4 is a plan view of a principal portion of the driving unit of Figs. 3A and 3B;
Fig. 5 is a bottom view of the principal portion of Fig. 4;
Fig. 6 is a plan view of an optical pickup unit of the optical disc drive of Fig. 1; and,
Figs. 7A and 7B are a plan view and a side view, respectively, showing an actuator included in the optical pickup unit of Fig. 6.

### DESCRIPTION OF THE PREFERRED EMBODIMENT:

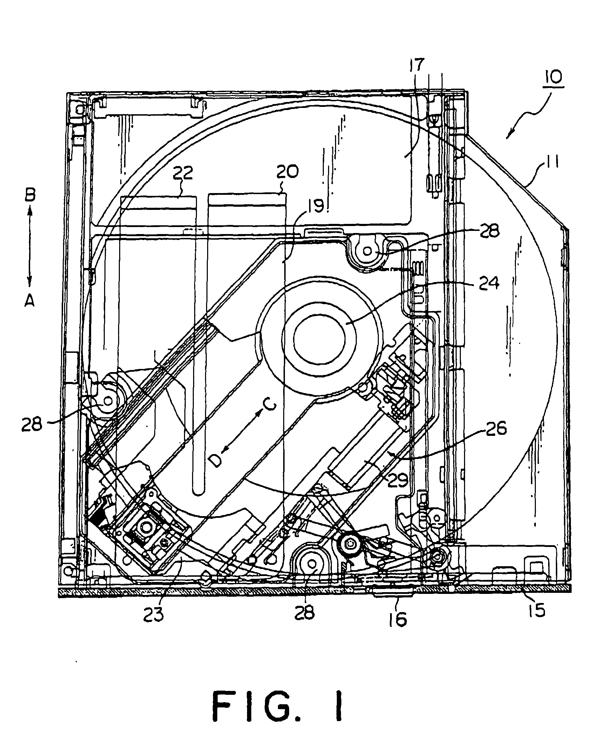

Referring to Figs. 1 through 7, description will be made about an optical pickup actuator according to a preferred embodiment of this invention.

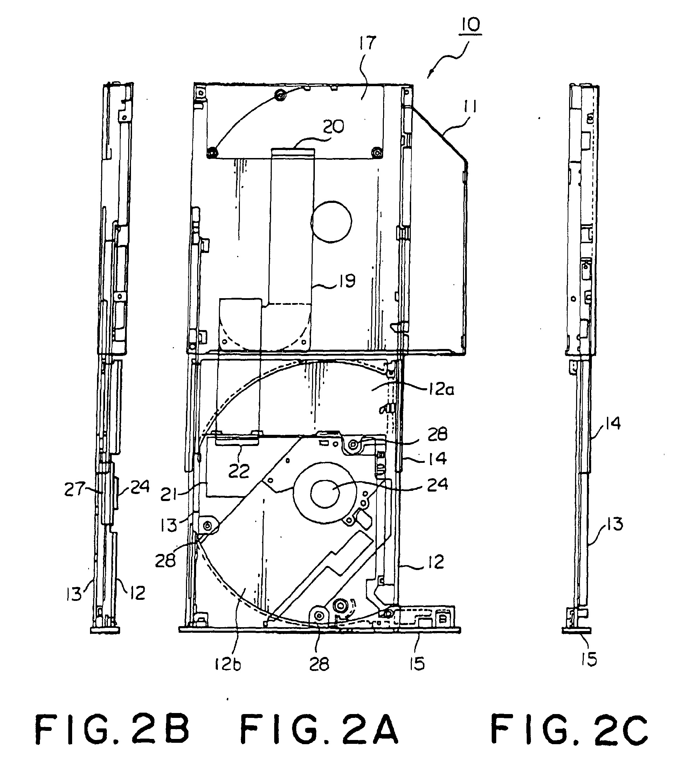

First, referring to Figs. 1 and 2, the description will proceed to an opti-cal disc drive 10 to which the optical pickup actuator of this invention is applied.

The optical disc drive 10 of Figs. 1 and 2 is a CD-ROM drive which is contained in a housing of a note-type personal computer (not shown) and which is generally called a thin-type CD-ROM drive. Because the optical disc drive of this type comprises, as described later, a tray 12 to which a disc driving and reproducing arrangement,including an optical pickup unit, a disc driving motor and a turntable, is attached, it is also called a built-in tray-type disc drive.

Fig. 1 shows the optical disc drive 10 in a state in which the tray 12 is encased in a main chassis (or an outer case) 11, or located in a disc-loaded position. Figs. 2A to 2C show the optical disc drive 10 in a state in which the tray 12 is drawn out from the main chassis 11, or located in a disc-changing position.

As shown in Rgs. 1 and 2A-2C, the optical disc drive comprises the above-mentioned main chassis 11, the above-mentioned tray 12 for receiving a CD-ROM disc (hereinafter referred to just or simply as a disc) (not shown), a sub-chassis 13 for supporting the tray 12, and a tray sliding mechanism 14 for supporting the tray 12 and the sub-chassis 13 to permit the tray 12 to freely move in a loading/ejecting direction against the main chassis 11.

The tray sliding mechanism 14 permits the tray 12 to be moved by hand in a direction which corresponds to a front and rear direction of the main chassis 11 and which is shown by an arrow A and B in Fig. 1. Accordingly, when the tray 12 moves in the direction of the arrow B, it is finally located at the disc loaded position shown in Fig. 1. Oppositely, when tray 23 moves in the direction of the arrow A, it is finally located at the disc changing position shown in Figs. 2A-2C.

As shown in Fig. 2A, the tray 12 comprises a disc facing surface defining a space for receiving a disc and an opening 12b formed in the disc facing surface 12a to receive the optical pickup unit and the turntable.

The disc facing surface 12a has a width smaller than an outer diameter of the disc and covers about two thirds of a recording surface of the disc. Thus, a part of the disc on the tray 12 protrudes from the tray12. This structure makes possible to reduction of dimensions and thickness of the optical disc drive 10.

At the front end of the tray 12, a front panel 15 is fixed. The front panel 15 has a window at the right of its center.

A switch button 16 is provided on the tray 12 so as to project forward from the window of the front panel 15. The switch button 16 is used for releasing from a lock state of a lock mechanism mentioned later to draw out the tray 12. Particularly, if the switch button 16 is pushed when the optical disk drive 10 is in the state of Fig. 1, the tray 12 incompletely jumps out of the main chassis 11 in the direction of the arrow A. Accordingly, it is easy to draw out the tray 12 from the main chassis 11 and to turn the optical disk drive 10 into the state shown in Fig. 2.

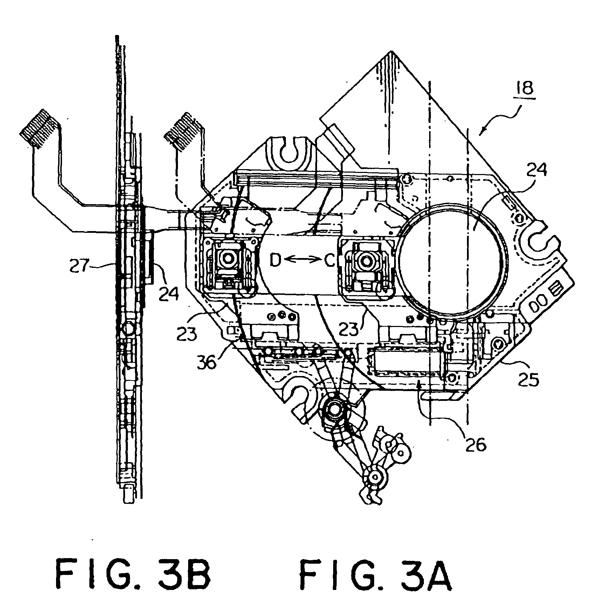

At a rear (or back) portion of the main chassis 11, a circuit board 17 is provided. The circuit board 17 is connected to a driving unit 18 attached to the sub-chassis 13 and illustrated in Figs. 3A and 3B. Because the sub-chassis 13 moves in the direction of the arrow A and B together with the tray 13, the driving unit 18 and the circuit board 17 are connected by a flexible circuit board 19 so as not to prevent the sub-chassis 13 from moving. The flexible circuit board 19 has a pair of end portions. One of the end portions is connected to a connector 20 provided on the circuit board 17 which the other is connected to a connector (or terminal portion) 22 provided on a motor base 21.

Next, referring to Figs. 3A and 3B together with Figs. 1 and 2A-2C, the description will proceed to the driving unit 18.

The driving unit 18 comprises a base 25 mounted on the sub-chassis 13, the optical pickup unit 23 movably attached to a back surface of the base 25, a pickup driving arrangement 26 for moving the optical pickup unit 23 in a radius direction (of arrow C and D in Fig. 3) of the disc, the turntable 24, and the disk driving motor 27 for rotating the turntable.

The base 25 is attached to the sub-chassis 13 and put into the opening 12b of the tray 12. As a result, a principal surface of the base 25 serves as a part of the tray 12.

Because the tray 12 vibrates when it moves between the disc loaded position and disc changing position, antivibration members 28 (see Fig. 1) are provided between the base 25 and the sub-chassis 13. The antivibration members 28 absorb vibration traveling from the tray 12 to both the optical pickup unit 23 and the turntable 24 attached to the base 25,and ease a harmful influence caused by the vibration on the optical pickup unit 23 and the turntable 24.

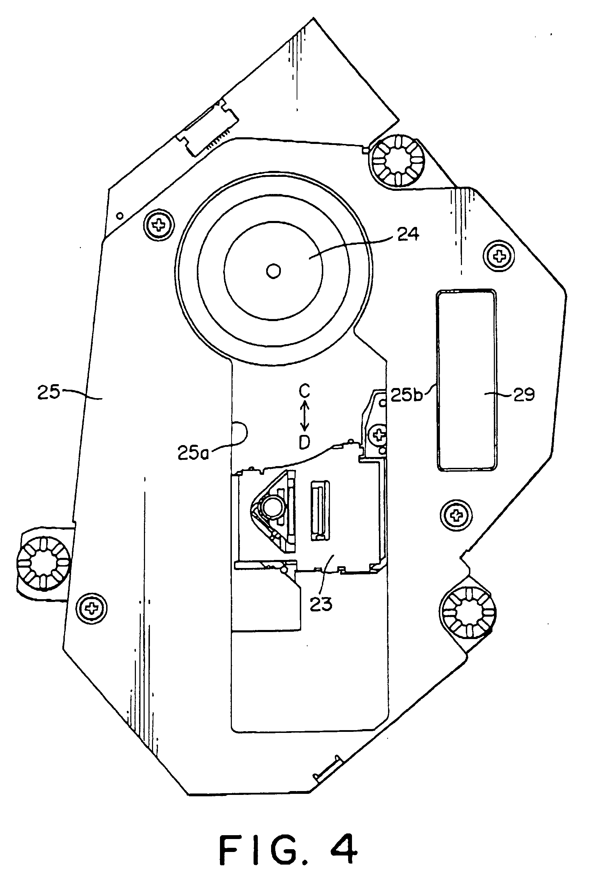

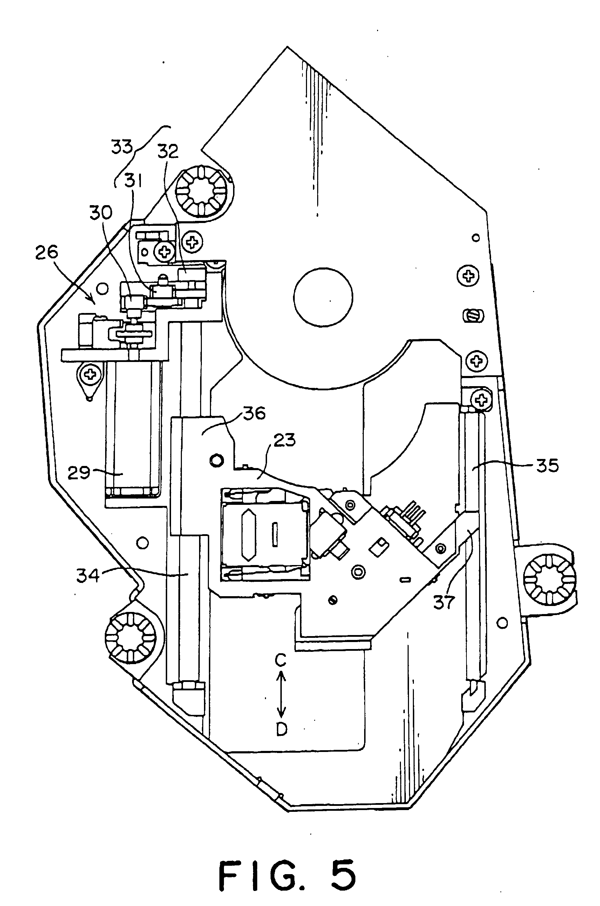

Next, referring to Fig. 4 and 5, the description will proceed to the pickup driving arrangement 26 for moving the optical pickup unit 23 in the direction of the arrow C and D shown in Figs. 4 and 5. Additionally, though the base 25 illustrated in Figs. 4 and 5 is slightly different from that of Figs 1 to 3A and 3B in shape, the base 25 of Figs. 4 and 5 is the same as that of Figs. 1 to 3A and 3B without the shape.

As illustrated in Fig. 4, the base 25 has an elongated opening 25a to expose the turntable 24 and to move the optical pickup unit 23 in the radius direction of the disc in a state that the optical pickup unit 23 faces the recording surface of the disc. In addition, the base 25 has a rectangular window 25b to partly receive a pickup driving motor 29 mentioned later. When the pickup driving motor 29 is attached to the base 25, a side surface of the pickup driving motor 29 is flush with the principal surface of the base 25. The structure that the pickup driving motor 29 is partly embedded in the base 25 contributes to reduction of thickness of not only the driving unit 18 but the optical disc drive 10.

As illustrated in Fig. 5, the pickup driving arrangement 26 is provided at a rear or lower side of the base 25. The pickup driving arrangement 26 comprises the pickup driving motor 29 having a drive shaft to which a gear 30 is fixed, a pickup driving mechanism 33 including gears 31 and 32 one of which engages with both the gear 30 and the other, a lead screw 34 rotated by the pickup driving mechanism 33, and a guide shaft 35 extending so as to be parallel to the lead screw 34 for guiding the optical pickup unit 23.

The optical pickup unit 23 has an engaging portion 36 engaging a screw formed on the peripheral surface of the lead screw 34 to correspond to the above mentioned structure of the pickup driving arrangement 26. The optical pickup unit 23 further has an arm portion 37 with an U-shaped groove engaging the guide shaft 35.

When the pickup driving motor 29 is driven, rotation of the driving shaft is transmitted to the lead screw 34 through the gear 30 and the pickup driving mechanism 33. When the lead screw 34 is rotated, the engaging portion 36 moves in the extending direction of the lead screw 34. This is because the arm portion 37 prevents the engaging potion 36 from rotating. Thus, the optical pickup 23 moves in the radial direction shown by the arrow C and D.

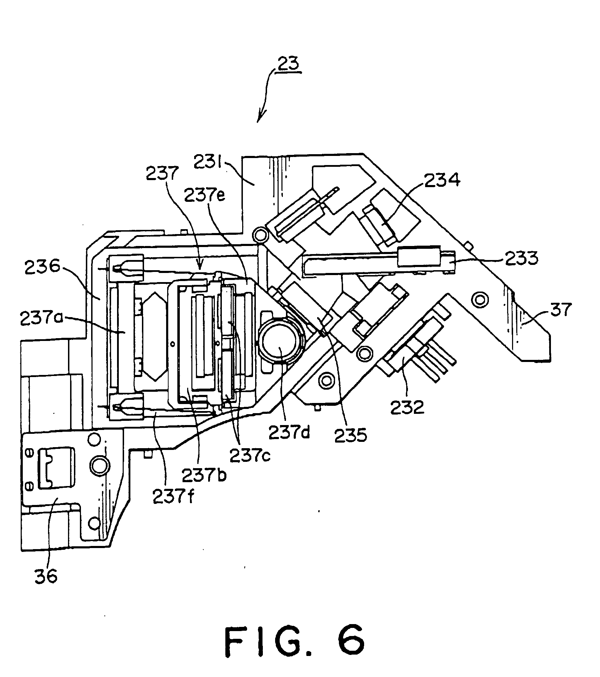

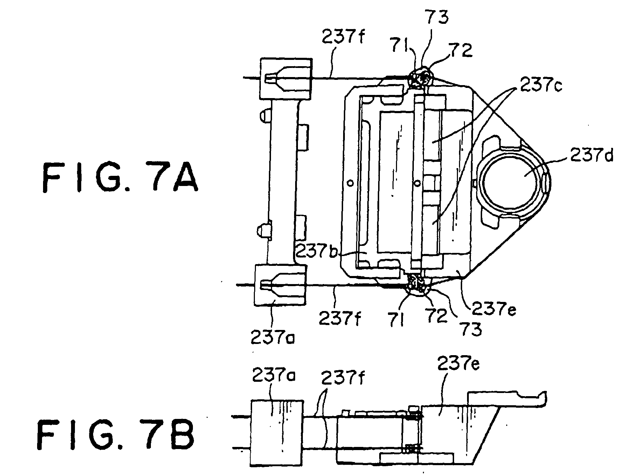

Next, referring to Figs. 6 and 7, the optical pickup unit 23 is described in more detail.

As shown in Fig. 6, the optical pickup unit 23 comprises a pickup base 231, a laser diode 232, a beam splitter 233, a photodiode 234, a mirror 235, an actuator base 236 and an actuator 237 which are mounted on the pickup base 231.

The actuator 237 comprises a damper base 237a fixed to the actuator base 236, a lens holder 237e on which a focusing coil 237b, a tracking coil 237c and an object lens 237d are mounted, and four suspension wires 237f fixed to the damper base 237a to swingably support the lens holder 237e.

As shown in Figs. 7A and 7B, the lens holder 237e has four terminals 71 provided on its both sides to connect ends of the focusing coil 237b and the tracking coil 237c respectively. The suspension wires 237f are fixed to the terminals 71, respectively, by soft solder 72. The suspension wires 237f not only swingably support the lens holder 237e but also are used for supplying electric power to the focusing coil 237b and the tracking coil 237c.

Lumps of the soft solder 72 are covered with insulating films 73. As the insulating films 73, resin that absorbs ultraviolet rays, epoxy, or quick-drying glue can be used.

In the optical pickup unit 23, the laser diode 232 emits a laser beam. The laser beam from the laser diode 232 is applied to the object lens 237d through both the beam splitter 233 and the mirror 235. The laser beam applied to the object lens 237d penetrates the object lens 237d from the back to the front of Fig. 6 or 7A and is applied to the recording surface of the disc.

When the laser beam is applied to the disc, the disc reflects the laser beam. The reflected laser beam from the disc goes backward and reaches the beam splitter 233 through the object lens 237d and mirror 235. The beam splitter 233 makes the reflected laser beam leave for the photodiode 234. The photodiode 234 receives the reflected laser beam from the beam splitter 233 to produce a detecting signal. Thus, the optical pickup unit 23 reads out information from the optical disk.

In the operation of the optical pickup unit 23, the focusing coil 237b swings the lens holder 237e front and back in Fig. 6 or 7A to focus on a recording track of the disc. In addition, the tracking coil 237c swings the lens holder 237e up and down in Fig. 6 or 7A to track the recording track.

It is possible that the lens holder 237e comes into contact with a side wall of the actuator base 236 (or the pickup base 231) as illustrated in Fig 6 when the lens holder 237e greatly swings up and down in Fig.6. Because the lumps of the solder 72 for fixing the suspension wires 237f to the terminals 71 protrudes from the side surfaces of the lens holder 237e, they are liable to come into contact with the actuator base 236 (or the pickup base 231). Both of the actuator base 236 and the pickup base 231 are generally made of metal. Accordingly, when the lumps of the solder 72 directly comes into contact with the actuator base 236 or the pickup base 231, the focusing coil 237b or the tracking coil 237c short-circuits. However, because the lumps of the solder 72 are covered with the insulating film 73 in this embodiment as mentioned above, they do not directly come into contact with the actuator base 236 or the pickup base 231 even though the lens holder 237e greatly swings. Thus, it is possible to prevent the focusing coil 237b and the tracking coil 237c from short-circuiting without complicating the structure of the optical disk drive 10.

While this invention has thus far been described in conjunction with the preferred embodiment thereof, it will readily be possible for those skilled in the art to put this invention into practice in various other manners. For example, the optical disc drive may be not only but the CD-ROM drive but also a CD-R drive, CD-RW drive, DVD-RAM drive or the like.

Each feature disclosed in this specification (which term includes the claims) and/or shown in the drawings may be incorporated in the invention independently of other disclosed and/or illustrated features.

The text of the abstract filed herewith is repeated here as part of the specification.

In an optical pickup actuator of an optical disc drive, soft solder is used for fixing suspension wires to terminals formed on side surfaces of a lens holder. Lumps of the solder are covered with insulating films. The suspension wires are further fixed to a damper base to swingably support the lens holder against the damper base. The suspension wire is also used for supplying electric power to a focusing coil and a tracking coil through the terminals. When the lens holder greatly swings, there is a case where the lens holder comes into contact with a peripheral member. However, the lumps of the solder do not come into contact with the peripheral member because they are covered with insulating film. Thus, it is possible to prevent the focusing coil and the tracking coil short-circuiting, even though the lens holder comes into contact with the peripheral member.

## Claims

1. An optical pickup actuator for use in an optical disc drive including a lens holder to which a focusing coil and a tracking coil are attached, a damper base, and suspension wires fixed to both said lens holder and said damper base for swingably supporting said lens holder on said damper base, each of said suspension wires being electrically connected to either said focusing coil or said tracking coil at a connection point, said optical pickup actuator being **characterized by** having an insulating film covering each connection point.

2. An optical pickup actuator as claimed in claim 1, wherein each insulating film is adapted to cover a solder lump which is located at the respective connection point.

3. An optical pickup actuator as claimed in claim 1, wherein said insulating film is formed from resin that absorbs ultraviolet rays, epoxy, or quick-drying glue.
